# FASCICULE DE BREVET EUROPEEN

(11) **EP 2 359 073 B1**
(45) Date de publication et mention de la délivrance du brevet: **09.01.2013**
(21) Numéro de dépôt: 09778921.8
(22) Date de dépôt: 07.01.2009
(51) Int. Cl.: F24J 2/22, F24J 2/20

(54) **ABSORBEUR POUR PANNEAU SOLAIRE THERMIQUE**
ABSORBER FÜR EINE SOLARWÄRMETAFEL
ABSORBER FOR A THERMAL SOLAR PANEL

(30) Priorité: 18.12.2008 EP 08106014
(43) Date de publication de la demande: 24.08.2011
(73) Titulaire: Lalive, François, 1815 Clarens (CH); Lalive, Ludmilla, 1815 Clarens (CH)
(72) Inventeur: Lalive, François, 1815 Clarens (CH); Lalive, Ludmilla, 1815 Clarens (CH)
(74) Mandataire: Vigand, Philippe
(86) Numéro de dépôt international: PCT/EP2009/050119
(87) Numéro de publication internationale: WO 2010/069608

(56) Documents cités:
- WO-A1-01/14080
- WO-A1-2004/083556
- CH-A5- 624 753
- FR-A1- 2 423 734
- US-A- 4 474 172

## Description

### DOMAINE TECHNIQUE

La présente invention concerne de manière générale un panneau solaire thermique consistant à convertir la lumière en chaleur. Plus particulièrement, la présente invention concerne un absorbeur pour un tel panneau solaire, prévu pour contenir un liquide ou fluide caloporteur.

### ARRIERE-PLAN TECHNOLOGIQUE

Il est connu dans l'art antérieur de nombreux types de panneaux solaires thermiques comprenant un absorbeur contenant le liquide caloporteur, pouvant être par exemple de l'eau, de l'eau mélangée avec un antigel ou encore tout simplement de l'air.

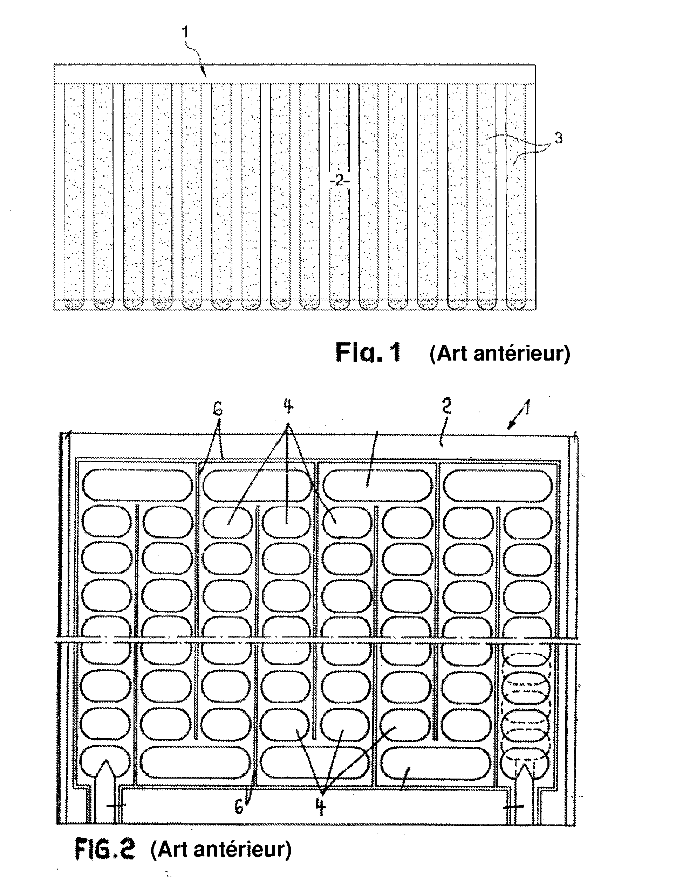

Selon une première catégorie de panneaux solaires thermiques représentés à la figure 1, ces panneaux 1 comprennent un absorbeur 2 formé par des tubes 3 munis d'ailettes dans lesquels circule en circuit fermé le liquide caloporteur. Les tubes sont chauffés de manière traditionnelle par le rayonnement solaire et transmettent la chaleur au liquide caloporteur qui circule à l'intérieur de ces tubes. Pour obtenir un meilleur rendement, l'absorbeur est placé dans une boîte vitrée isolante, non représentée ici, afin d'obtenir un effet de serre. Un réflecteur est généralement disposé sous les tubes pour augmenter encore la récupération de chaleur.

Un autre type d'absorbeur existant consiste dans une plaque de métal disposée sous le panneau en verre, et sous laquelle sont agencés de fins conduits métalliques contenant le liquide caloporteur et serpentant sur toute la longueur du panneau.

De tels panneaux solaires thermiques présentent néanmoins un certain nombre d'inconvénients parmi lesquels on retiendra plus spécialement la complexité et la fragilité mécaniques de l'absorbeur ainsi qu'un rendement relativement faible en raison du faible volume de liquide caloporteur pour une surface vitrée déterminée du panneau solaire.

Selon une deuxième catégorie de panneaux solaires thermiques, connue notamment du document CH 624 753, le capteur solaire 1, représenté à la figure 2, est constitué de deux plaques métalliques 2, entre lesquelles un liquide caloporteur circule. Sur les plaques de métal 2 sont formés à intervalles réguliers des coussins en forme de bosses 4. Les bosses d'une plaque de métal sont décalées d'une demi-bosse par rapport à celles de l'autre plaque. Les deux plaques métalliques 2 sont soudées l'une à l'autre aux moyens de cordons de soudure 6 réalisés au moyen d'un rouleau et agencés de manière à ce qu'un écoulement turbulent du liquide caloporteur circulant entre les plaques soit généré. Avec un tel capteur solaire, un rendement plus élevé peut être atteint indépendamment de la position du soleil. En outre, l'écoulement turbulent apporte un bon échange de chaleur entre les plaques métalliques et le liquide caloporteur. Un tel capteur solaire peut être fabriqué à moindre coût et aisément monté sur l'extérieur d'un toit.

Le capteur solaire présenté dans le cadre du document CH 624 753 bien qu'ayant un meilleur rendement et étant mécaniquement plus simple que ceux comportant des tubes, présente encore néanmoins certains inconvénients, en particulier de résistance à la pression exercée par le liquide caloporteur sur les plaques métalliques du capteur. En effet, il a été remarqué dans le cadre de la présente invention que dans des conditions d'utilisation normales, la dilatation du liquide caloporteur contenu dans le capteur entraîne des pressions sur les plaques amenant les cordons de soudure situés entre les bosses à céder.

Il est par ailleurs connu, en particulier du document WO 01/14080, un échangeur de chaleur 23, représenté aux figures 3a et 3b, comprenant deux parois 13, 15 reliées de manière ponctuelle par compression et formage en une pluralité de points 11 puis étanchéifiées au niveau de leur bord 25. Une telle solution alternative bien que permettant une liaison plus forte des deux parois 13 et 15 entre elles, présente également certains inconvénients et en particulier nécessite un espace plan relativement 19 important autour de chaque point de liaison 11. La nécessité d'un tel espace 19 rend son implémentation difficile sur une structure de capteur solaire telle que présentée dans le document CH 624 753. En effet, soit l'espace entre les bosses est augmenté ce qui réduit d'autant les surfaces de communication entre les bosses des deux plaques et à pour effet de rendre le chemin du liquide caloporteur moins efficient, soit cet espace est gardé tel quel et dans ce cas le risque de perforation d'une bosse est considérablement accru et l'étanchéité du capteur menacée.

### RESUME DE L'INVENTION

Le but de la présente invention est de répondre aux inconvénients mentionnés ci-dessus, tout en gardant les avantages liés à la deuxième catégorie, en fournissant un absorbeur efficace, c'est-à-dire présentant un rendement calorifique optimisé, mais aussi simple, robuste et étanche, c'est-à-dire pouvant supporter de manière fiable la pression du liquide caloporteur qu'il contient.

Dans ce but, selon un premier aspect, la présente invention concerne un absorbeur pour panneau solaire, prévu pour contenir du liquide caloporteur, comprenant des première et deuxième plaques disposées l'une en face de l'autre et fixées l'une à l'autre par l'intermédiaire d'une pluralité de points de liaison, des première et deuxième matrices de formes géométriques protubérantes, formées sur les faces externes respectivement des première et deuxième plaques, les matrices étant décalées l'une par rapport à l'autre de manière à tracer un chemin de circulation du liquide caloporteur dans l'absorbeur, des moyens d'entrée et de sortie du liquide caloporteur agencés respectivement à une extrémité et à l'autre extrémité du chemin de circulation du liquide caloporteur, caractérisé en ce qu'au moins une partie des formes géométriques ont une forme générale protubérante, creusée en son centre de manière à définir une cavité, et en ce qu'au moins certains desdits points de liaison, non traversant, sont agencés dans au moins certaines desdites cavités.

De cette manière, il est possible de maintenir solidement les deux plaques entre elles en utilisant un nombre limité de points de liaison sans diminuer les surfaces de communication entre les protubérances des deux plaques et sans risque pour l'étanchéité de l'absorbeur dans la mesure où les cavités assurent un espace suffisant pour obtenir un point de liaison efficace. L'absorbeur ainsi obtenu est remarquable en ce qu'il permet de combiner l'obtention d'un bon rendement calorifique avec un système de fixation par liaison non traversant assurant un excellent maintien et une parfaite étanchéité entre les plaques.

Selon une variante de réalisation avantageuse, les formes géométriques creusées ont une forme générale annulaire protubérante. Une telle forme présente l'avantage d'être simple et donc facilement estampable tout en assurant une surface de communication optimisée entre les formes annulaires d'une plaque avec les formes décalées de l'autre plaque. De plus, il a été montré dans le cadre de la présente invention que le chemin du liquide caloporteur ainsi obtenu permet, d'une part, de maximiser le caractère sinueux du chemin parcouru par le liquide caloporteur ce qui assure un rendement calorifique optimisé, tout en évitant, d'autre part, des retenues du liquide caloporteur au travers de l'absorbeur sur les angles éventuels des formes géométriques de la matrice pouvant entraîner une dilatation excessive non souhaitable pour des raisons de résistance mécanique de l'absorbeur.

Selon une autre variante de réalisation avantageuse, les points de liaison non traversant situés dans des cavités sont réalisés par déformation mécanique des deux plaques de manière à les solidariser l'une avec l'autre. De préférence, les points de liaison non traversant situés dans des cavités sont des points de clinchage des deux plaques entre elles. On notera à cet effet que le clinchage est une technique d'assemblage mécanique de plaques, dont le principe consiste à connecter les deux plaques par emboutissage entre un poinçon et une matrice et ceci sans apport de matière. Bien qu'une telle solution nécessite un espace important autour du point de clinchage, elle s'avère particulièrement robuste tout en étant rapide, et tout à fait adéquate grâce aux cavités dans lesquelles ces points de liaison sont réalisés. Alternativement, les points de liaison non traversant situés dans des cavités sont des rivets emboutissant les deux plaques ensemble sans n'en perforer aucune.

Selon une autre variante de réalisation avantageuse, une liaison continue à la périphérie des plaques est obtenue par soudure ultrasonique ou fusion laser des deux plaques ensemble. L'utilisation de soudure par ultrasons ou fusion laser présente le grand avantage de fixer de manière étanche les deux plaques entre elles, sans laisser de copeaux de plaques ou d'autres déchets de matières entre les plaques. En outre, ce type de soudure continue s'avère plus rapide que les techniques traditionnelles de soudure, cet avantage étant amplifié par le caractère continu de la soudure. Avantageusement, au moins une ligne de soudure ultrasonique ou fusion laser des deux plaques est ajoutée entre les formes géométriques. L'adjonction de telles lignes de soudure, tout en gardant les avantages de ce type de soudure sans déchet, permet de renforcer le maintien des plaques entre elles.

Selon une autre variante de réalisation avantageuse, les moyens d'entrée et de sortie du liquide caloporteur sont agencés de manière diagonalement opposée sur la face externe d'une des deux plaques. Ces moyens d'entrée et sortie assurent la circulation au travers de l'absorbeur, et sont localisés sur la face externe de la plaque inférieure, une fois montés dans un panneau, de sorte que les joints utilisés sont protégés d'une exposition directe au rayonnement lumineux ce qui pourrait altérer leur étanchéité, tout en préservant une surface maximale d'exposition sur la face externe de la plaque supérieure de l'absorbeur ainsi qu'une protection de la plaque de verre du panneau destinée à recouvrir l'absorbeur. Avantageusement, ces moyens d'entrée et de sortie sont des embouts disposés sur une portion plate de la plaque inférieure en regard d'une forme géométrique de la plaque supérieure, de manière à réduire l'épaisseur totale de l'absorbeur.

Selon un deuxième aspect, la présente invention concerne un panneau solaire thermique comprenant un absorbeur (30) disposé dans un cadre (31) et recouvert par une plaque de verre (32), dans lequel est monté un absorbeur prévu pour contenir du liquide caloporteur selon l'une quelconque des variantes selon le premier aspect.

Selon une variante de réalisation avantageuse, la plaque inférieure de l'absorbeur est soutenue par des rebords intérieurs du panneau.

### BREVE DESCRIPTION DES FIGURES

D'autres caractéristiques et avantages de la présente invention apparaîtront plus clairement à la lecture de la description détaillée qui suit de modes de réalisation de l'invention donnés à titre d'exemples nullement limitatifs.
- La figure 1, déjà décrite, représente un premier type d'absorbeur pour panneau solaire thermique selon l'art antérieur;
- La figure 2, déjà décrite, représente un deuxième type d'absorbeur pour panneau solaire thermique selon l'art antérieur;
- Les figures 3a et 3b, déjà décrites, représentent un troisième type d'absorbeur pour panneau solaire thermique selon l'art antérieur ;
- La figure 4 représente une vue de dessus, d'un absorbeur pour panneau solaire thermique selon un mode de réalisation préféré de la présente invention;
- La figure 5 est un agrandissement d'une portion de l'absorbeur selon la figure précédente ;
- Les figures 6a et 6d représentent des vues en coupe respectivement selon les axes I-I, II-II, III-III et IV-IV, de la figure 5 ;
- Les figures 7a à 7g représentent les différentes étapes pour la mise en oeuvre d'un procédé de fabrication d'un absorbeur selon un exemple de réalisation ;
- La figure 8 représente schématiquement un exemple de panneau solaire thermique incorporant un absorbeur.

### DESCRIPTION DETAILLEE DE L'INVENTION

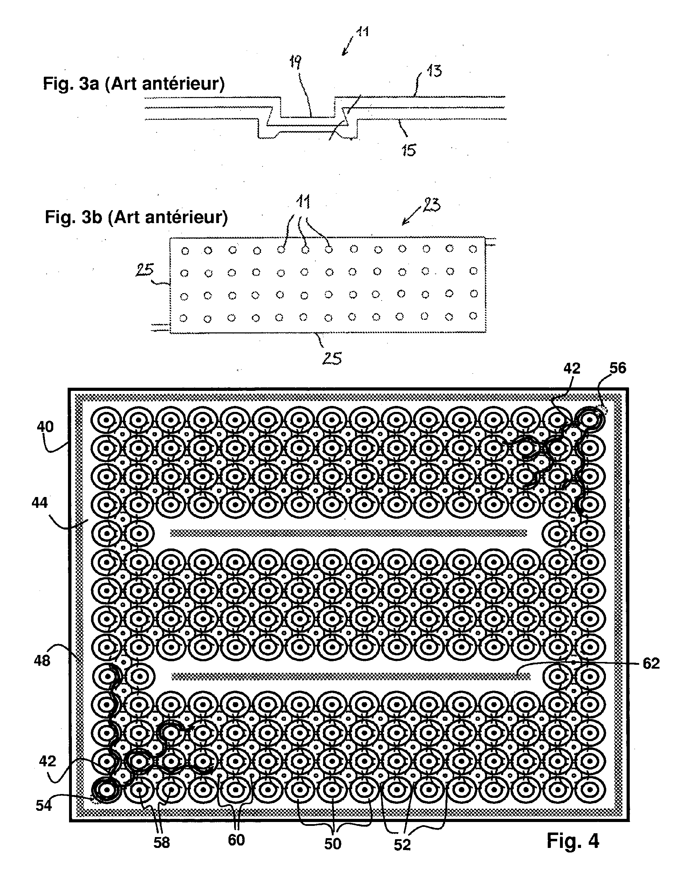

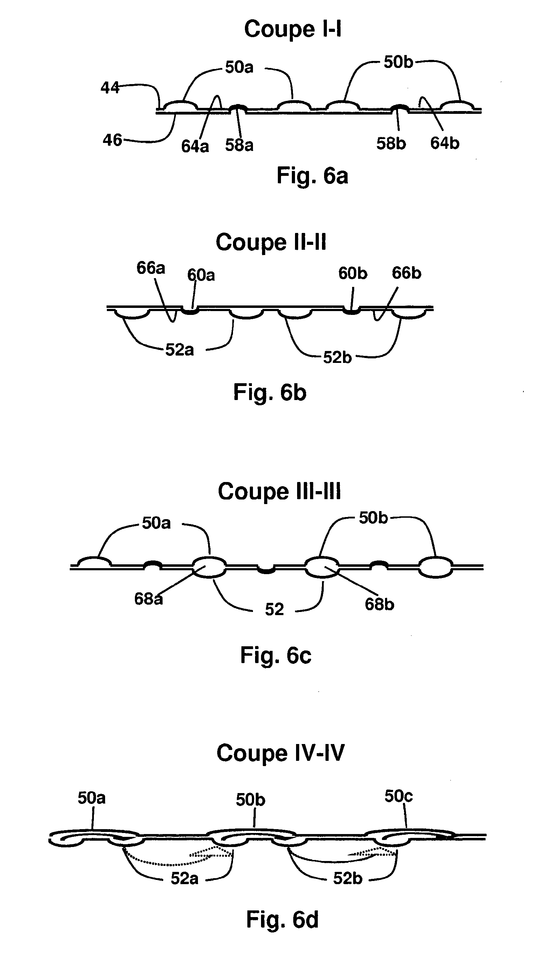

L'invention sera décrite ci-après uniquement à titre d'exemple en relation avec les figures 4 à 8. Considérons en premier lieu, la figure 4 qui représente une vue de dessus d'un absorbeur pour panneau solaire selon un mode de réalisation préféré de la présente invention. L'absorbeur 40 pour panneau solaire est prévu pour contenir du liquide caloporteur 42. L'absorbeur est réalisé principalement au moyen de deux plaques de métal superposées et fixées l'une à l'autre de manière étanche. Sur cette figure, seule la plaque supérieure 44 est visible, la plaque inférieure (46, figure 6a) étant située dessous.

Pour réaliser une fixation étanche à la périphérie des plaques, il est prévu avantageusement une liaison continue 48 obtenue par soudure ultrasonique ou fusion laser continue des deux plaques ensemble. Cette première solution s'avère la plus simple et la plus rapide à mettre en oeuvre, tout en assurant une bonne étanchéité périphérique. Une solution alternative, néanmoins moins intéressante car plus complexe à mettre en oeuvre, consiste à plier les bords d'une des deux plaques puis à glisser l'autre plaque dans l'interstice laissé entre la plaque pliée et la pliure et enfin à souder les deux plaques ainsi attachées. Une autre solution possible, également moins intéressante car plus complexe à mettre en oeuvre, consiste à plier les bords des deux plaques étampées au moins une fois l'une sur l'autre, de préférence deux fois, et à les coincer entre deux tiges plates faisant effet de sandwich puis à y appliquer un rivet à intervalle régulier de manière à pincer sans traverser la bordure ainsi pliée et à la rendre étanche. De préférence, une colle 3M appelée 'sealskin' est ajoutée entre les plaques pour garantir pleinement l'étanchéité. Cette dernière solution basée sur un système mécanique de pinçage bien que plus lourde à mettre en oeuvre, se révèle plus solide que la deuxième solution basée sur des soudures de plaques attachées, et donne à l'absorbeur une bordure plus ferme et plus rigide facilitant son maniement et sa pose dans le panneau solaire. On notera encore que les tiges, par exemple en laiton ou en acier sont découpées au niveau des angles des plaques de manière à ne pas se chevaucher, l'étanchéité des coins pouvant être assurée par soudure.

Chacune des plaques 44, 46 est étampée de sorte que sa face externe, c'est-à-dire celle qui n'est pas en contact avec l'autre plaque, soit couverte par une matrice de formes géométriques. Ainsi la plaque supérieure 44 est couverte par une première matrice de formes géométriques 50 protubérantes sur sa face externe, tandis que la plaque inférieure 46 est couverte par une deuxième matrice de formes géométriques 52 également protubérantes sur sa face externe.

Les deux matrices sont donc, d'une part, inversées l'une par rapport à l'autre de sorte que les protubérances des formes géométriques sont orientées vers l'extérieur de l'absorbeur et, d'autre part, décalées l'une par rapport à l'autre de manière à former un chemin de circulation du liquide caloporteur 42 dans l'absorbeur entre l'entrée 54 et la sortie 56 du liquide caloporteur. L'entrée et la sortie sont de préférence réalisées sous la forme d'embouts d'admission et d'évacuation agencés respectivement à une extrémité et à l'autre extrémité du chemin de circulation du liquide caloporteur. Ainsi par exemple l'embout d'entrée 54 est utilisé pour introduire du liquide caloporteur non chauffé dans l'absorbeur 40. Ensuite le liquide caloporteur 42 traverse l'ensemble de l'absorbeur en serpentant au travers des deux matrices pour ressortir chauffé par l'embout de sortie 56.

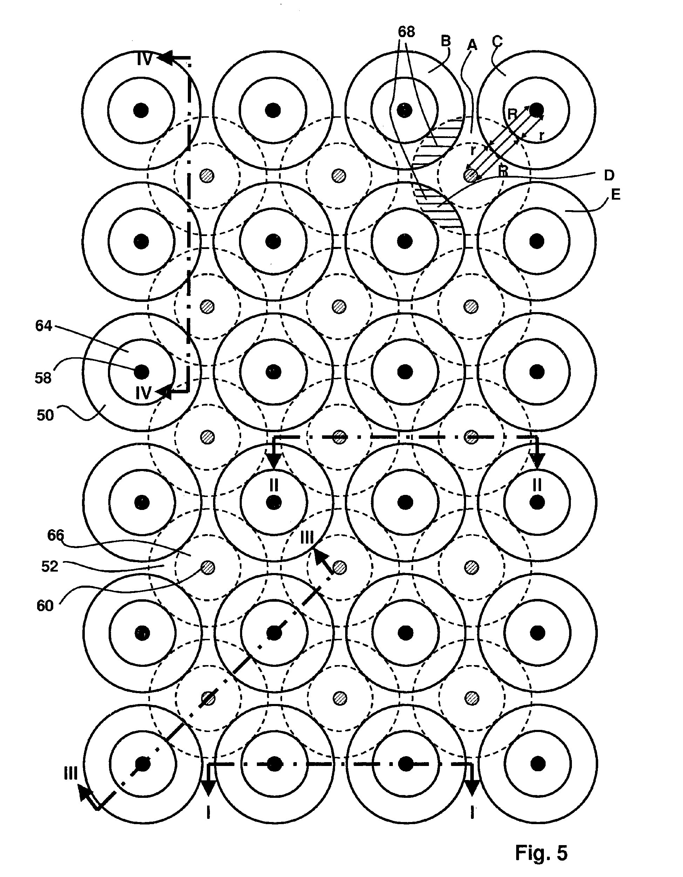

Afin d'assurer un bon maintien des plaques entre elles, susceptible de résister à la pression exercée par le liquide caloporteur 42, les plaques 44 et 46 sont fixées l'une à l'autre par l'intermédiaire d'une pluralité de points de liaison 58, 60 non traversant disséminés sur la surface de l'absorbeur. Le détail de l'arrangement de ces points de liaison par rapport aux formes géométriques sera expliqué en détail ci-après en liaison avec la figure 5. En vue de renforcer le maintien des plaques entre elles, il est peut être prévu de manière additionnelle une ou plusieurs lignes de soudure 62 ultrasonique ou fusion laser des deux plaques. Ces lignes de soudure 62 sont réparties sur la surface de l'absorbeur et agencées entre les formes géométriques 50, 52.

On notera que les formes géométriques 50, 52 ont été représentées de manière identiques sur la figure 4. Néanmoins, il est bien évident qu'il est tout à fait envisageable de prévoir des formes géométriques de formes différentes dans la mesure où des surfaces de communication sont prévues entre les formes 50 de la plaque supérieure et les formes 52 de la plaque inférieure.

La figure 5 est un agrandissement d'une portion de l'absorbeur de la figure 4 représentant en détail les formes géométriques selon un mode de réalisation préféré de l'invention. Les formes géométriques 50, 52 ont avantageusement une forme générale annulaire protubérante. Toutefois, on comprendra que d'autres formes pourront être utilisées, comme par exemple une forme annulaire ouverte ou encore une forme de bande polygonale. D'une manière plus générale, il est prévu qu'au moins certaines formes géométriques, et de préférence toutes, sont creusées en leur centre de manière à définir une cavité 64, 66, de préférence plane, et que des points de liaison 58, 60, non traversant, sont agencés dans au moins certaines des cavités, de préférence toutes.

On remarquera encore sur la figure 5 que l'utilisation d'une forme annulaire tant pour les formes étampées sur la plaque supérieure que celles étampées sur la plaque inférieure présente l'avantage de fournir des surfaces de communication 68 optimisée pour le chemin du liquide caloporteur. Selon une variante préférée, les anneaux des deux surfaces sont de même taille et décalés de sorte que le centre d'un anneau A située sur une surface, est distant du centre de chacun des anneaux voisins_B,C, D et E situés sur l'autre surface, d'une longueur égale à un rayon extérieur d'un anneau plus un rayon intérieur d'un anneau. Un tel chevauchement des anneaux permet d'avoir le meilleur compromis entre la taille de la surface de communication 68 dans la mesure où toute la largeur de bande d'un anneau recouvre au maximum toute la largeur de bande de l'anneau voisin sur l'autre surface, et la taille de la cavité dans laquelle est réalisée le point de liaison, qui correspond au disque intérieur d'un anneau et est donc maximale.

Les points de liaison non traversant 58, 60 situés dans les cavités 64, respectivement 66 sont réalisés par déformation mécanique des deux plaques dans la cavité de manière à les solidariser l'une avec l'autre. Une solution avantageuse consiste à réaliser des points de clinchage. Ces points de clinchage peuvent être obtenus simplement par emboutissage entre un poinçon et une matrice de la cavité à clincher. Des exemples élaborés de points de clinchage sont donnés dans le document WO 01/14080. Alternativement, il peut être utilisé des rivets venant emboutir les deux plaques ensemble sans n'en perforer aucune. Les rivets sont de préférence cylindriques et présentent avantageusement un espace évidé permettant l'emboutissage des plaques sans perforation de ces dernières, la matière étant déformée à l'intérieur de cet évidement. L'intérieur des rivets peut être imbibé d'adhésif pour renforcer la retenue des plaques embouties. Une autre alternative consistant à effectuer des soudures ultrasoniques ou fusion laser au niveau des cavités pourrait être également envisagée même s'il n'offre pas totalement la même garantie de maintien à la pression de l'ensemble de l'absorbeur.

Les figures 6a et 6d représentent des vues en coupe respectivement selon les axes I-I, II-II, III-III et IV-IV, de la figure 5, permettant de bien distinguer les points de liaison réalisés par clinchage ainsi que les surfaces de communication entre formes géométriques définissant le chemin du liquide caloporteur.

La coupe I-I, représentée à la figure 6a, a été choisie de telle sorte que soient visibles les formes géométriques 50 de la plaque supérieure 44 et les points de liaison 58 correspondants. La forme annulaire d'au moins certaines formes géométriques, comme les formes 50a et 50b, définie une cavité centrale, 64a, respectivement 64b, dans laquelle est prévu un point de liaison, 58a, respectivement 58b, de préférence par clinchage des deux plaques 44 et 46 entre elles.

La coupe II-II, représentée à la figure 6b, a été choisie de telle sorte que soient visibles les formes géométriques 52 de la plaque inférieure 46 et les points de liaison 60 correspondants. La forme annulaire de la forme 52a, respectivement 52b, définie une cavité centrale, 66a, respectivement 66b, dans laquelle est prévu un point de liaison, 60a, respectivement 60b, de préférence par clinchage des deux plaques 44 et 46 entre elles.

La coupe III-III, représentée à la figure 6c, a été choisie de sorte que soient visibles les formes géométriques 50 et 52 des deux plaques 44 et 46 ainsi que les points de liaison 58 et 60 correspondants. Sur cette figure, on remarquera tout d'abord les zones de communications 68a et 68b optimisées entre le premier anneau 50a de la plaque supérieure et l'anneau 52 de la plaque inférieure et respectivement entre cet anneau 52 et le deuxième anneau 50b de la plaque supérieure. On remarquera ensuite qu'il est possible de réaliser les points de liaison 64 depuis l'un et / ou depuis l'autre côté de l'absorbeur. L'exemple représenté sur cette figure consiste à réaliser les points de liaison situés dans les cavités des anneaux de la plaque supérieure depuis le côté de la plaque inférieure et inversement. On comprendra bien entendu que d'autres alternatives sont envisageables.

Enfin la coupe IV-IV, représentée à la figure 6d, a été choisie de sorte à rendre visible la communication entre les formes géométriques des deux surfaces sans que soient visibles les points de liaison entre les plaques. Sur cette figure, on comprend bien quel est le chemin du liquide caloporteur au travers de l'absorbeur ainsi réalisé. En effet, si l'on se place au début au niveau de l'anneau 50a situé sur la plaque supérieure, on s'aperçoit que le liquide qu'il contient va se propager dans l'anneau 52a situé sur la plaque inférieure, qui lui-même va propager le liquide ayant fait le tour de l'anneau 52a, à l'anneau 50b situé sur la plaque supérieure, qui de la même manière va propager le liquide à l'anneau 52b, qui le propage à l'anneau 52c et ainsi de suite jusqu'à avoir atteint l'extrémité de sortie de l'absorbeur. De cette manière, on obtient, comme souhaité, une circulation en serpentin du liquide caloporteur au travers de l'absorbeur.

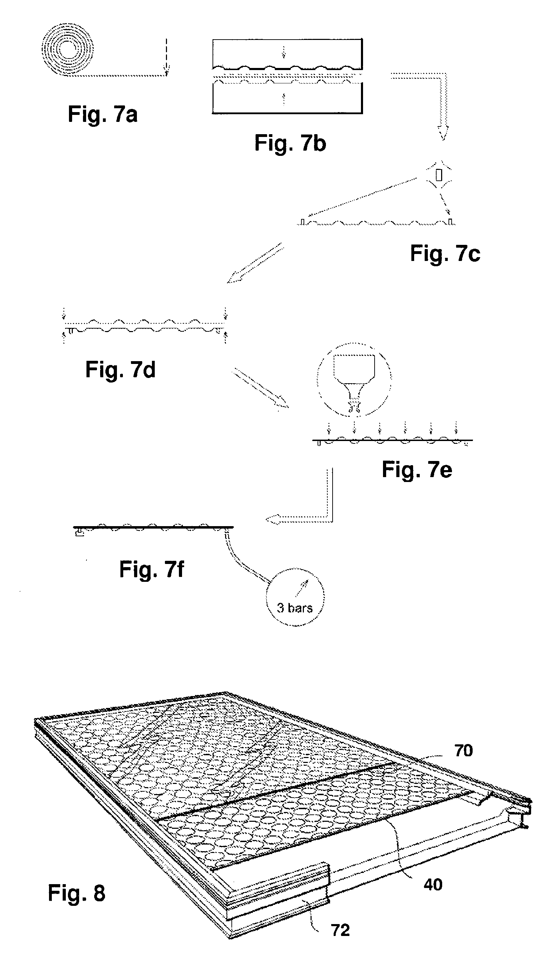

Les figures 7a à 7g représentent les différentes étapes pour la mise en oeuvre d'un procédé de fabrication d'un absorbeur selon un exemple de réalisation. Tout d'abord, la figure 7a représente un rouleau, par exemple de cuivre, d'aluminium d'acier inox ou de matériau thermoplastique, servant de matière première pour les plaques. Le matériau utilisé pour la plaque supérieure, c'est-à-dire celle soumise au rayonnement solaire, et la plaque inférieure pouvant être différents, on utilise de préférence un rouleau pour chaque type de plaques, inférieures ou supérieures. Ainsi par exemple le matériau utilisé pourra être du cuivre pour les plaques inférieures, tandis que pour les plaques supérieures, le cuivre sera chromé à l'avance et mis en rouleau séparément. Un tel chromage peut par exemple être réalisé par cuivrage d'un substrat par déposition d'une couche initiale de nickel et d'une couche finale de chrome noir. Suivant la taille de l'absorbeur, et donc du panneau solaire désiré, une première étape consiste à couper des première et deuxième plaques à partir du ou des rouleaux utilisés. Ensuite, comme représenté à la figure 7b, une deuxième étape consiste à étamper, au moyen d'une presse présentant une matrice de formes souhaitées, la première plaque de manière à en faire ressortir une première matrice de formes géométriques correspondantes puis à étamper avec un décalage au moyen de la presse la deuxième plaque de manière à en faire ressortir une deuxième matrice de formes géométriques décalée par rapport à la première matrice de la première plaque. On notera qu'avantageusement, la matrice de formes géométriques de la presse est asymétrique et qu'ainsi les étapes d'étampage sont simplement réalisées en introduisant la première, respectivement la deuxième (représentée en pointillés), plaque à une extrémité, respectivement à l'autre extrémité, de la presse. On notera aussi que la presse comprend également à deux de ses extrémités disposées en diagonale des pics amovibles permettant de perforer aux endroits souhaités deux trous sur la plaque inférieure sur lesquels seront montés les embouts d'entrée et de sortie du liquide caloporteur, les pics étant retirés lors du passage des plaques supérieures de l'absorbeur. La figure 7c représente une étape consistant à mettre en place les embouts aux endroits percés prévus à cet effet, soit par vissage soit par soudage soit par toute autre méthode adéquate assurant une bonne étanchéité. La figure 7d représente l'étape consistant à bien disposer les deux plaques de manière à ce que les matrices de formes aient le décalage souhaitée et à fixer de manière étanche les bordures des deux plaques entre elles. La plaque inférieure est représentée sur cette figure dessous la plaque supérieure. Cette étape de fixation étanche est avantageusement réalisée par une soudure ultrasonique continue des bordures. D'autres alternatives de fixation étanche des bordures des plaques entre elles ont été décrites précédemment. Les lignes de soudure additionnelles entre les formes géométriques, dans le cas éventuel où elles sont prévues, seront réalisées de préférence à ce moment. On notera en outre que cette étape de fixation peut être effectuée après celle exposée ci-après. La figure 7e représente H une étape importante consistant à lier les deux plaques ensemble sans les traverser. L'exemple représenté sur cette figure se réfère à la solution de points de liaison obtenus par rivetage. On comprendra que de la même manière, on pourra effectuer la liaison par clinchage des deux plaques entre une matrice et un poinçon aux endroits souhaités. Avantageusement, des tests d'étanchéité sont pratiqués sur l'absorbeur ainsi obtenu, tel que cela est représenté par exemple à la figure 7f. L'ouverture d'un des deux embouts est obturée au moyen d'un bouchon, tandis que l'autre ouverture est reliée à un tube mettant l'absorbeur sous pression. Ainsi toute déficience dans la liaison étanche des deux plaques est repérée et peut être réparée. On notera que dans le cas où la plaque supérieure est chromée, elle alors est de préférence recouverte d'un film plastique de protection depuis le début du procédé, qui n'est retiré qu'au dernier moment lors de l'installation de l'absorbeur dans le cadre du panneau solaire. Enfin, l'absorbeur obtenu selon ce type de procédé de fabrication est similaire à celui représenté à la figure 4, et est destiné à être incorporé dans un panneau solaire thermique.

La figure 8 représente schématiquement un exemple de panneau solaire thermique incorporant un absorbeur. Sur cette figure, les formes géométriques ont été représentées schématiquement sous la forme de disque par souci de simplification. L'absorbeur 40 est disposé dans un cadre 72 et recouvert sur le dessus par une plaque de verre 70 réalisant un effet de serre entre cette dernière et la plaque supérieure de préférence noircie de l'absorbeur. Le panneau solaire thermique comprend encore un mécanisme assurant la circulation du liquide caloporteur dans l'absorbeur entre le premier embout d'entrée du liquide et deuxième embout de sortie permettant l'évacuation du liquide caloporteur une fois chauffé au travers de l'absorbeur. Ce mécanisme n'étant pas directement relié au principe de la présente invention, il n'a pas été représenté ici. Selon une variante de réalisation avantageuse, la plaque inférieure de l'absorbeur est soutenue par des rebords intérieurs du panneau.

A titre de remarques, on pourra noter que l'utilisation du cuivre comme métal pour la plaque supérieure présente l'avantage d'être un bon conducteur ayant un bon rendement calorifique. De plus, le cuivre peut être plus facilement embouti, ce qui permet de réaliser des formes géométriques avec un plus grand relief ce qui permet d'augmenter le volume de liquide caloporteur. La plaque de métal inférieure pourra être en aluminium, qui est plus résistant, ce qui permet alors de rigidifier l'ensemble de l'absorbeur tout en réduisant son épaisseur. En outre cela permet d'assurer un bon soutien sur les rebords intérieurs du panneau solaire dans lequel l'absorbeur est incorporé.

On notera aussi que l'utilisation de points de liaison non traversant assure non seulement l'étanchéité de l'intérieur de l'absorbeur, sans déchets, mais aussi un excellent maintien des plaques ensembles contrairement à une fixation par soudure traditionnelle entre les plaques risquant de se détacher lors de la dilatation du liquide caloporteur contenu par l'absorbeur. L'étanchéité totale de l'absorbeur est obtenue grâce à la fixation de manière étanche des bordures des deux plaques entre elles.

On comprendra que diverses modifications et / ou améliorations évidentes pour l'homme du métier peuvent être apportées à la présente invention sus décrite sans sortir du cadre de l'invention défini par les revendications annexées. En particulier, on comprendra que les formes géométriques ne sont pas forcément toutes semblables. Par exemple, certaines formes peuvent être annulaires et certaines autres formes peuvent être circulaires. On pourra également prévoir la possibilité d'avoir des formes annulaires sur une plaque et des formes de disque (i.e. cuvette) sur l'autre plaque. En outre, on comprendra que des points de liaison ne sont pas forcément présents dans chaque forme creusée. Enfin, on pourra encore noter que les formes creusées destinées à recevoir un point de liaison dans leur cavité peuvent être de différentes formes, parmi lesquelles, on retrouve une forme annulaire circulaire ou annulaire elliptique, ouverte ou fermée, une forme polygonale creusée, par exemple rectangulaire ou en losange, ou encore toute autre forme creusée laissant une cavité centrale suffisamment large pour y réaliser un point de liaison.

## Revendications

1. Absorbeur (40) pour panneau solaire, prévu pour contenir un fluide caloporteur (42), comprenant
- des première (44) et deuxième (46) plaques disposées l'une en face de l'autre et fixées l'une à l'autre par l'intermédiaire d'une pluralité de points de liaison(58, 60),
- des première et deuxième matrices de formes géométriques (50, 52) protubérantes, formées sur les faces externes respectivement des première et deuxième plaques, les matrices étant décalées l'une par rapport à l'autre de manière à assurer un chemin de circulation du fluide caloporteur dans l'absorbeur,
- des moyens d'entrée (54) et de sortie (56) du liquide caloporteur agencés respectivement à une extrémité et à l'autre extrémité du chemin de circulation du liquide caloporteur,
**caractérisé en ce qu'**au moins certaines des formes géométriques ont une forme générale protubérante, creusée en son centre de manière à définir une cavité (64, 66), et
**en ce qu'**au moins certains desdits points de liaison, non traversant, sont agencés dans au moins certaines desdites cavités.

2. Absorbeur (40) selon la revendication 1, **caractérisé en ce que** les formes géométriques (50, 52) creusées ont une forme générale annulaire protubérante.

3. Absorbeur (40) selon l'une des revendications 1 ou 2, **caractérisé en ce que** les points de liaison (58, 60) non traversant situés dans des cavités (64, 66) sont réalisés par déformation mécanique des deux plaques (44, 46) de manière à les solidariser l'une avec l'autre.

4. Absorbeur (40) selon l'une des revendications 1 à 3, **caractérisé en ce que** les points de liaison (58, 60) non traversant situés dans des cavités (64, 66) sont des points de clinchage des deux plaques entre elles.

5. Absorbeur (40) selon l'une des revendications 1 à 3, **caractérisé en ce que** les points de liaison non traversant situés dans des cavités sont des rivets emboutissant les deux plaques ensemble sans n'en perforer aucune.

6. Absorbeur (40) selon l'une des revendications 1 à 5, **caractérisé en ce qu'**une liaison continue (48) à la périphérie des plaques (44, 46) est obtenue par soudure ultrasonique ou fusion laser des deux plaques ensemble.

7. Absorbeur selon l'une des revendications 1 à 6, **caractérisé en ce qu'**au moins une ligne de soudure ultrasonique ou fusion laser (62) des deux plaques (44, 46) est réalisée entre les formes géométriques (50, 52).

8. Absorbeur (40) selon l'une des revendications 1 à 8, **caractérisé en ce que** les moyens d'entrée (54) et de sortie (56) du fluide caloporteur sont agencés de manière diagonalement opposée sur des portions plates de la face externe d'une des deux plaques (46) en regard de formes géométriques (50) agencées sur l'autre plaque (44).

9. Un panneau solaire thermique comprenant un absorbeur (40) disposé dans un cadre (72) et recouvert par une plaque de verre (70), dans lequel est monté un absorbeur prévu pour contenir du fluide caloporteur selon l'une quelconque des revendications 1 à 8.

10. Le panneau solaire thermique selon la revendication 9, **caractérisé en ce que** la plaque inférieure est soutenue par des rebords intérieurs du panneau.

## Claims

1. An absorber (40) for solar panel provided to contain a heat transfer fluid (42) comprising:
- first (44) and second (46) plates arranged facing each other and secured to one another via a plurality of connection points (58, 60),
- first and second matrixes of protuberant geometric shapes (50, 52) formed on the respective outer surfaces of the first and second plates, the matrixes being offset from each other so as to ensure a circulation pathway for the heat transfer fluid in the absorber;
- inlet (54) and outlet (56) means for the heat transfer fluid respectively arranged at one end and at the other end of the circulation pathway for the heat transfer fluid,
**characterized in that** at least some geometric shapes have a general protuberant shape hollowed in the centre to define a cavity (64, 66); and
and **in that** at least some of the said connection points, non-penetrating points, are arranged in at least some of the said cavities.

2. The absorber (40) according to claim 1, **characterized in that** the hollowed geometric shapes (50, 52) have a general annular protuberant shape.

3. The absorber (40) according to one of claims 1 or 2 **characterized in that** the non-penetrating connection points (58, 60) located in the cavities (64, 66) are obtained by mechanical deformation of the two plates (44, 46) so as to secure them to each other.

4. The absorber (40) according to one of claims 1 to 3 **characterized in that** the non-penetrating connection points (58, 60) located in the cavities (64, 66) are clinch points clinching together the two plates.

5. The absorber (40) according to one of claims 1 to 3, **characterized in that** the non-penetrating connection points located in cavities are rivets stamping the two plates together without perforating either one of them.

6. The absorber (40) according to one of claims 1 to 5, **characterized in that** a continuous connection (48) on the periphery of the plates (44, 46) is obtained by ultrasound welding or laser fusion of the two plates together.

7. The absorber according to one of claims 1 to 6, **characterized in that** at least one ultrasound weld or laser fusion line (62) of the two plates (44, 46) is obtained between the geometric shapes (50, 52).

8. The absorber (40) according to one of claims 1 to 8, **characterized in that** inlet (54) and outlet (56) means for the heat transfer fluid are arranged diagonally opposite on flat portions of the outer surface of one of the two plates (46) facing geometric shapes (50) arranged on the other plate (44).

9. A solar thermal panel comprising an absorber (40) arranged in a frame (72) and covered with a sheet of glass (70) in which an absorber is mounted provided to contain heat transfer fluid according to any of claims 1 to 8.

10. The solar thermal panel according to claim 9 **characterized in that** the lower plate is supported by inner edges of the panel.

## Patentansprüche

1. Absorber (40) für Solarpaneel, ausgelegt, um eine Wärmeträgerflüssigkeit (42) zu enthalten, umfassend
- erste (44) und zweite (46) Tafeln, die einander gegenüberliegend angeordnet sind und mit Hilfe einer Vielzahl von Verbindungspunkten (58, 60) aneinander befestigt sind,
- erste und zweite Matrizen mit vorstehenden geometrischen Formen (50, 52), die auf den Außenseiten der ersten bzw. zweiten Tafeln gebildet sind, wobei die Matrizen mit Bezug aufeinander derart versetzt sind, dass sie einen Strömungsweg der Wärmeträgerflüssigkeit im Absorber sicherstellen,
- Mittel zum Eintritt (54) und Austritt (56) der Wärmeträgerflüssigkeit, die jeweils an einem Ende und am anderen Ende des Strömungswegs der Wärmeträgerflüssigkeit angebracht sind,
**dadurch gekennzeichnet, dass** mindestens bestimmte der geometrischen Formen eine im Allgemeinen vorstehende Form aufweisen, die in ihrer Mitte vertieft ist, um einen Hohlraum (64, 66) zu definieren, und
dadurch, dass mindestens bestimmte der Punkte zur nicht durchgehenden Verbindung in mindestens bestimmten der Hohlräume angebracht sind.

2. Absorber (40) nach Anspruch 1, **dadurch gekennzeichnet, dass** die vertieften geometrischen Formen (50, 52) eine im Allgemeinen vorstehende kreisförmige Form aufweisen.

3. Absorber (40) nach einem der Ansprüche 1 oder 2, **dadurch gekennzeichnet, dass** die Punkte zur nicht durchgehenden Verbindung (58, 60), die sich in Hohlräumen (64, 66) befinden, durch mechanische Verformung der zwei Tafeln (44, 46) durchgeführt werden, um sie fest miteinander zu verbinden.

4. Absorber (40) nach einem der Ansprüche 1 bis 3, **dadurch gekennzeichnet, dass** die Punkte zur nicht durchgehenden Verbindung (58, 60), die sich in Hohlräumen (64, 66) befinden, Punkte zum Clinchen der zwei Tafeln untereinander sind.

5. Absorber (40) nach einem der Ansprüche 1 bis 3, **dadurch gekennzeichnet, dass** die Punkte zur nicht durchgehenden Verbindung, die sich in Hohlräumen befinden, Nieten sind, die die zwei Platten zusammenziehen, ohne eine davon zu perforieren.

6. Absorber (40) nach einem der Ansprüche 1 bis 5, **dadurch gekennzeichnet, dass** eine kontinuierliche Verbindung (48) am Umfang der Tafeln (44, 46) durch Ultraschallschweißen oder Laserfusion des zwei Tafeln miteinander erhalten wird.

7. Absorber nach einem der Ansprüche 1 bis 6, **dadurch gekennzeichnet, dass** mindestens eine Ultraschallschweiß- oder Laserfusionslinie (62) der zwei Platten (44, 46) zwischen den geometrischen Formen (50, 52) durchgeführt wird.

8. Absorber (40) nach einem der Ansprüche 1 bis 8,
**dadurch gekennzeichnet, dass** die Mittel zum Eintritt (54) und Austritt (56) der Wärmeträgerflüssigkeit diagonal entgegengesetzt auf ebenen Abschnitten der Außenseite einer der zwei Tafeln (46) gegenüber geometrischen Formen (50) angebracht sind, die auf der anderen Tafel (44) angebracht sind.

9. Thermisches Solarpaneel, umfassend einen Absorber (40), der in einem Rahmen (72) angeordnet ist und von einer Glastafel (70) bedeckt ist, in der ein Absorber montiert ist, ausgelegt, um Wärmeträgerflüssigkeit nach einem der Ansprüche 1 bis 8 zu enthalten.

10. Thermisches Solarpaneel nach Anspruch 9, **dadurch gekennzeichnet, dass** die untere Tafel durch innere Vorsprünge des Paneels getragen wird.
